(19)

Europäisches
Patentamt

European
Patent Office

Office européen
des brevets

(11) **EP 3 967 521 B1**

(12) **EUROPEAN PATENT SPECIFICATION**

(45) Date of publication and mention
of the grant of the patent:
**29.11.2023 Bulletin 2023/48**

(21) Application number: **21192904.7**

(22) Date of filing: **24.08.2021**

(51) International Patent Classification (IPC):
**B60C 11/03** *(2006.01)*      **B60C 99/00** *(2006.01)*

(52) Cooperative Patent Classification (CPC):
**B60C 11/0332;** B60C 99/006; B60C 2011/0355;
B60C 2011/0367

(54) **TIRE HAVING TREAD GROOVES AND METHOD FOR CONFIGURING GROOVE DEPTHS**

REIFEN MIT LAUFFLÄCHENRILLEN UND VERFAHREN ZUR FESTLEGUNG DER RILLENTIEFEN

PNEU COMPORTANT DES RAINURES DE BANDES DE ROULEMENT ET PROCÉDÉ POUR PRÉÉTABLIR LA PROFONDEUR DES RAINURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2020 JP 2020152300**

(43) Date of publication of application:
**16.03.2022 Bulletin 2022/11**

(73) Proprietor: **Sumitomo Rubber Industries, Ltd.
Kobe-shi, Hyogo-ken 651-0072 (JP)**

(72) Inventor: **INADA, Yutaro
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 689 639          CN-A- 101 665 063
DE-A1-102008 055 498    DE-T5-112014 002 971
JP-A- 2014 168 997        US-A1- 2019 381 836**

EP 3 967 521 B1

## Description

### Technical field

The present invention relates to a tire whose tread portion is provided with tread grooves.

### Background art

JP 2019-182339 A below discloses a pneumatic tire, of which tread portion is provided with a plurality of main grooves extending in the tire circumferential direction, and of which wear resistance is improved by specifically defining the profile of the tread portion.

DE 10 2008 055 498 A1 discloses a tire having a ground patch that has a concave outer contour across the circumferential direction, the axially outer circumferential grooves having a deeper groove width than the axially inner circumferential grooves. Other tires are known from US 2019/0381836 A1 and DE 11 2014 002971 T5.

### summary of the invention

### Problems to be solved by the invention

In the pneumatic tire of JP 2019-182339 A, all the main grooves have the same groove depth. such groove depth, namely, a relatively large groove depth, is liable to become a noise sound source. Thus, with respect to the generation of noise sound due to the deep main grooves, further improvement is desired.

The present invention was made in view of the above problems, and a primary object of the present invention is to provide a tire in which, by specifically defining groove depths, noise performance can be improved while maintaining excellent wear resistance.

The invention is defined by the independent claim.

### Brief description of the drawings

Fig. 1 is a cross-sectional view of the tread portion of a tire as an embodiment of the present invention.
Fig. 2 is a diagram showing a ground contacting patch of the tire.
Fig. 3 is a cross-sectional view of the tread portion of a tire as another embodiment of the present invention.
Fig. 4 is a flowchart showing a method for determining groove depths.

### Description of the Preferred Embodiments

The present invention can be applied to various tires such as pneumatic tires and non-pneumatic tires so called airless tires, for various vehicles such as passenger cars, heavy duty vehicles (truck and bus), two-wheeled vehicles, etc.

Taking a pneumatic tire for passenger cars as an example, embodiments of the present invention will now be described in detail in conjunction with accompanying drawings.

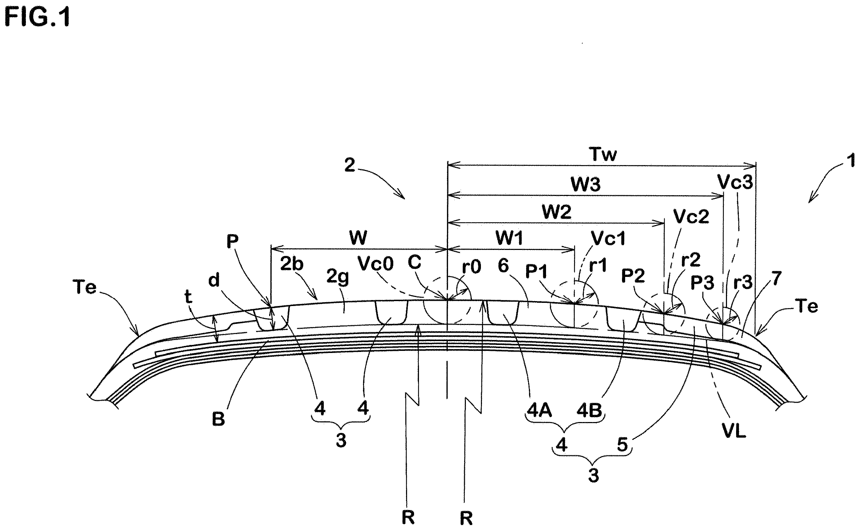

Fig. 1 shows the tread portion 2 of a tire 1 as an embodiment taken along a meridian cross-section of the tire under its standard state.

Here, in the case of a pneumatic tire, the "standard state" is such that the tire is mounted on a standard wheel rim and inflate to a standard pressure but loaded with no tire load.

In this application including specification and claims, various dimensions, positions and the like of the tire refer to those under the standard state unless otherwise noted.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The standard pressure and the standard tire load are the maximum air pressure and the maximum tire load for the tire specified by the same organization in the Air-pressure/maximum-load Table or similar list.

For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load capacity" in ETRTO, the maximum value given in the above-mentioned table in TRA or the like.

If there is no standard applicable to the tire, or not yet established, then a wheel rim, air pressure and tire load specified for the tire by the tire manufacturer or the like are used as the standard wheel rim, standard pressure and standard tire load.

The tread portion 2 has a tread surface contacting with the ground, and provided with a plurality of grooves 3 to expedite water drainage when running in wet conditions.

The grooves 3 include circumferential grooves 4 (in the present embodiment, four circumferential grooves 4) extending in the tire circumferential direction.

In the present embodiment, the circumferential grooves 4 are an axially inner crown circumferential groove 4A and an axially outer shoulder circumferential groove 4B which are disposed on each side of the tire equator c.

The grooves 3 may include lateral grooves 5 extending in the tire axial direction for example.

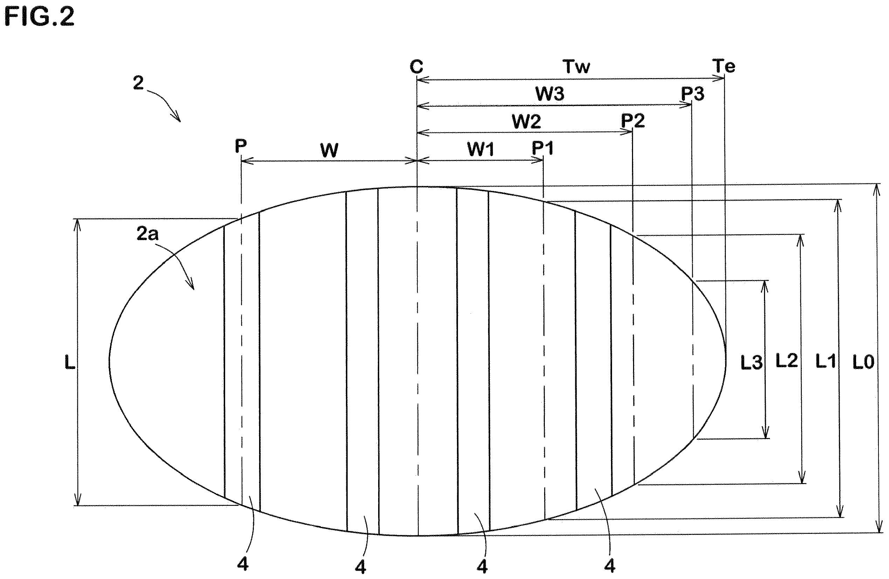

Fig. 2 is a diagram schematically showing a ground contacting patch 2a of the tread portion 2 which occurs when the tire 1 in its standard state is put on a flat horizontal surface at a camber angle of zero, and loaded with the standard tire load. As shown, the ground contacting patch 2a has ground contact lengths L in the tire circumferential direction at respective positions P in the tire axial direction.

As shown in Figs. 1 and 2, in the present embodiment, the circumferential grooves 4 have respective groove depths d. The groove depths d and the ground contact lengths L measured at axial positions P of the circumferential grooves 4 are in a relationship in which the respective groove depths d increase or decrease as the respective ground contact lengths L increase or decrease.

By setting the groove depths d of the circumferential grooves 4 in this way, decreasing rates of the groove depths d due to the progress of the tread wear can be made constant.

Thereby, even though the amount of wear is different depending on the axial position, the formation of an excessively large groove depth d can be prevented. As a result, noise sound generated by the circumferential grooves 4 can be reduced.

A crown ground contact length L0 which is the ground contact length L at the tire equator C is 1.10 to 1.50 times a shoulder ground contact length which is the ground contact length L at an axial position spaced apart from the tire equator c by 80% of a half ground contact width Tw of the ground contacting patch 2a which is the axial distance from the tire equator c to one of axially outermost end Te of the ground contacting patch 2a.

such ground contacting patch 2a is suitable for achieving both steering stability performance and wear resistance when the tire 1 is a pneumatic tire for passenger cars.

As shown in Fig. 1, in the present embodiment, the groove bottoms of the circumferential grooves 4 are located on a virtual line VL predetermined in the meridian cross-section of the tire under its standard state with no tire load. Namely, the groove depths d of the circumferential grooves 4 are so defined. Thus, the virtual line VL can easily and appropriately define the groove depths d of the circumferential grooves 4.

The circumferential grooves 4 in tread shoulder portions are prevented from having excessively large groove depths d, which can reduce noise caused by the circumferential grooves 4. The virtual line VL helps to reduce the thickness t of the tread rubber 2g of the tread portion 2, which can reduce the weight of the tire 1 and improve the fuel efficiency of the tire 1. The thickness t of the tread rubber 2g is defined as the distance between the radially outer surface 2b of the tread portion 2 and a tread reinforcing belt layer B disposed in the tread portion 2.

The virtual line VL is a line positioned radially inside the radially outer surface 2b of the tread portion 2 and contacting with a reference virtual circle vc0 and a first virtual circle Vc1.

The reference virtual circle Vc0 is a circle having a reference radius r0 and the center positioned on the tire equatorial plane c.

The first virtual circle Vc1 is a circle having a first radius r1 and the center positioned at a first position P1 on the radially outer surface 2b spaced apart from the tire equator c in the tire axial direction.

The virtual line VL is uniquely-defined by the reference virtual circle vc0 and the first virtual circle Vc1 defined on each sides in the tire axial direction of the reference virtual circle vc0. The virtual line VL makes it unnecessary to obtain the ground contact lengths L at the axial positions of the circumferential grooves 4. This can reduce the time required for determining the groove depths d of the circumferential grooves 4 based on the ground contact lengths L.

In the present embodiment, the reference radius r0 is defined based on the groove depth d of the circumferential groove 4 disposed adjacently to the tire equator C. specifically, the reference radius r0 is set to a value equal to the radial distance measured at the tire equator c between the radially outer surface 2b and a curved line having the same radius R of curvature as the radially outer surface 2b and drawn passing through the deepest positions of the groove bottoms of the two crown circumferential grooves 4A disposed adjacently to the tire equator c on both sides thereof.

As shown in Figs. 1 and 2, the above-mentioned first position P1 is spaced apart from the tire equator C by an axial distance W1 of from 40% to 55% of the half ground contact width Tw in this example.

In this example, the first position P1 is located in the above-mentioned middle land portion 6 between the crown circumferential groove 4A and the shoulder circumferential groove 4B.

The ground contact length L at the first position P1 is referred to as the first ground contact length L1.

It is preferable that the virtual line VL further contacts with a second virtual circle Vc2 having a second radius r2 and the center positioned at a second position P2 on the radially outer surface 2b spaced apart from the tire equator c by an axial distance w2 of from 75% to 80% of the half ground contact width Tw. such virtual line VL can be defined more accurately by the reference virtual circle vc0, the first virtual circle Vc1, and the second virtual circle Vc2.

The second position P2 is located in a shoulder land portion 7 axially outside the shoulder circumferential groove 4B in this example.

The ground contact length L at the second position P2 is referred to as the second ground contact length L2.

In the present embodiment, the second ground contact length L2 is equal to the shoulder ground contact length

It is preferable that the first radius r1 and the second radius r2 are determined by the following equation (1) and equation (2), respectively:

$$r1 = r0 \times L1 \; / \; \{L1 + \alpha(L0-L1)\} \; ... \; eq.(1)$$

$$r2 = r0 \times L2 \; / \; \{L2 + \alpha(L0-L2)\} \; ... \; eq.(2)$$

wherein

r0 is the reference radius,
L0 is the ground contact length measured at the tire equator,
L1 is the ground contact length measured at the first position,
L2 is the ground contact length measured at the second position, and
$\alpha$ is a correction coefficient.

such equations (1) and (2) are useful for uniquely defining the virtual line VL.

The correction coefficient $\alpha$ is preferably in a range from 0.5 to 1.0.

such correction coefficient $\alpha$ is useful for optimizing the groove depths d of the circumferential grooves 4, and can improve the noise performance and reduce the weight while maintaining the excellent wear resistance of the tire 1. Further, such correction coefficient $\alpha$ can suppress deformation of the belt layer B and improve the durability of the tire 1. From this point of view, the correction coefficient $\alpha$ is more preferably in a range from 0.6 to 0.9, still more preferably 0.7 to 0.8.

It may be possible that the virtual line VL further contacts with a third virtual circle vc3 having a third radius r3 and the center positioned at a third position P3 on the radially outer surface 2b spaced apart from the tire equator c by an axial distance w3 of from 90% to 95% of the half ground contact width Tw.

such virtual line VL can be defined more accurately by the reference virtual circle vc0, the first virtual circle Vc1, the second virtual circle vc2, and the third virtual circle vc3.

The third position P3 is located in the shoulder land portion 7 in this example.

The ground contact length L at the third position P3 is referred to as the third ground contact length L3.

It is preferable that the third radius r3 is determined by the following equation (3):

$$r3 = r0 \times L3 \; / \; \{L3 + \alpha \, (L0-L3)\} \; ... \; eq.(3)$$

wherein

r0 is the reference radius,
L0 is the crown ground contact length,
L3 is the third ground contact length, and
$\alpha$ is the correction coefficient.

such equation (3) is useful for uniquely defining the virtual line VL.

In the present embodiment, the groove bottoms of the lateral grooves 5 are located on the virtual line VL or radially outside the virtual line VL. Namely, the groove depths d of the lateral grooves 5 are defined in this way.

Thus, the virtual line VL can easily and appropriately define maximum values of the groove depths d of the lateral grooves 5.

The maximum value for the groove depth d of a groove 3 at an axial position can be determined based on the following equation (4) which is a generalization of the above equations (1) to (3):

$$Max.\ d = r0 \times L\ /\ \{L + \alpha\ (L0-L)\}\ ...\ eq.(4)$$

wherein

    $\alpha$ is the correction coefficient,
    r0 is the reference radius,
    L0 is the crown ground contact length, and
    L is the ground contact length of the ground contacting patch 2a at the axial position of the groove 3.

such equation (4) is useful since the groove depth d can be determined without defining the virtual line VL, in particular, when it takes time to define the virtual line VL.

That is, given that L is a ground contact length of the ground contacting patch measured at the axial position of a target groove 3; r0 is a given value for the depth of a circumferential groove disposed on the tire equator or most adjacently to the tire equator among the circumferential grooves; L0 is a ground contact length of the ground contacting patch measured at the tire equator, and $\alpha$ is a coefficient between 0.5 to 1.0, then the groove depth d of the target groove 3 is set to be equal to or less than a value of the right-hand side of the equation (4), and preferably more than 80% of this value. For example, when the target groove 3 is the circumferential groove 4, the groove depth d is set to be equal to the obtained value. when the target groove 3 is the lateral groove 5, the groove depth d is set to be equal to or less than the obtained value, and preferably more than 80% of the obtained value.

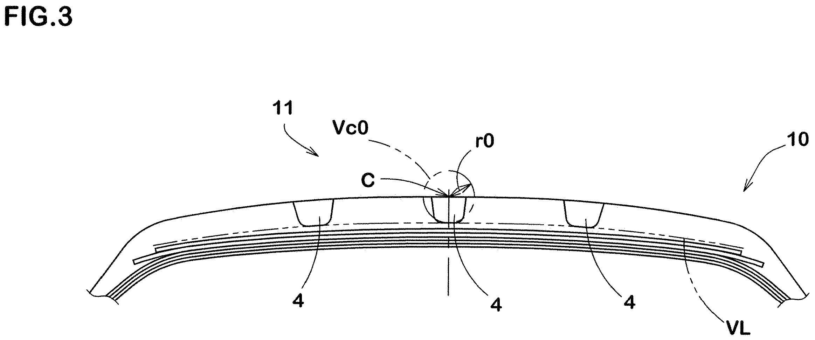

Fig. 3 is a cross-sectional view schematically showing the tread portion 11 of a tire 10 as another embodiment taken along a meridian cross-section of the tire under its standard state. As shown, the tread portion 11 is provided with three circumferential grooves 4. In this example, one of the circumferential grooves 4 is disposed on the tire equator c.

In this embodiment, the reference radius r0 of the reference virtual circle Vc0 is equal to the groove depth d of the circumferential groove 4 disposed on the tire equator c. In such reference virtual circle vc0, the definition of the reference radius r0 is clear and simple, and the virtual line VL can be easily set.

Next, a method for determining groove depths d of the tire 1 of which tread portion 2 is provided with the circumferential grooves 4 will be described with reference to Figs. 1 to 3.

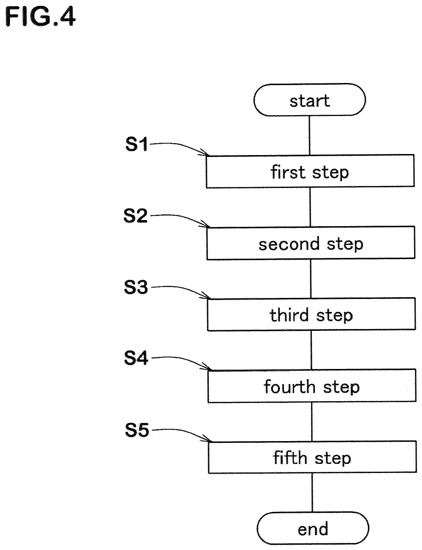

Fig. 4 is a flowchart showing a non-claimed method for determining groove depths.

As shown in Fig. 4, this method comprises a first step S1 of determining the ground contacting patch 2a of the tread portion 2 which occurs when the tire 1 under its standard state, is put on a flat horizontal surface at a camber angle of zero and loaded with the standard tire load.

In the first step S1, the ground contacting patch 2a can be determined through a simulation using a computer or an experiment using an actual tire in order to obtain the accurate shape of the ground contacting patch 2a.

As shown in Fig. 4, the method further comprises, after the first step S1, a second step of obtaining the ground contact lengths L of the ground contacting patch 2a measured in the tire circumferential direction at respective axial positions P.

In the second step s2, for example, obtained are the ground contact lengths L at the position of the tire equator c and at least one of the first position P1, the second position P2, and the third position P3.

In such second step s2, it is not necessary to obtain the ground contact lengths L at every axial positions P, therefore, the processing time can be shortened.

As shown in Fig. 4, the method further comprises, after the first step s2, a third step s3 of obtaining virtual radii r based on the ground contact lengths L measured at the predetermined positions P in the tire axial direction. More specifically, each virtual radius r is equal to a value obtained from the right-hand side of the above-mentioned equation (4). For example, the virtual radii r may include the reference radius r0 of the reference virtual circle Vc0, the first radius r1 of the first virtual circle Vc1, the second radius r2 of the second virtual circle vc2, and the third radius r3 of the third virtual circle vc3 are used. In the third step s3 in this example, there are obtained the reference radius r0 and at least one of the first radius r1, the second radius r2, and the third radius r3.

The method further comprises, after the third step s3, a fourth step s4 of defining the virtual line VL contacting with virtual circles Vc respectively having the obtained virtual radii r and centers positioned on the radially outer surface 2b of the tread portion 2 in the meridian cross-section of the tire under its standard state with no tire load.

The method further comprises, after the fourth step s4, a fifth step s5 of determining the groove depths d of the circumferential grooves 4 so that the groove bottoms of the circumferential grooves 4 are positioned on the virtual line VL. By setting the groove depths in this way, the groove depths d of the circumferential grooves 4 are respectively optimized for the amounts of wear which are different from each other, depending on the positions in the tire axial direction. As a result, the tire noise caused by the circumferential grooves 4 can be reduced.

Thus, the method of determining the groove depths can improve the noise performance of the tire while maintaining the excellent wear resistance of the tire.

while detailed description has been made of preferable embodiments of the present invention, the present invention can be embodied in various forms within the scope of the claims without being limited to the illustrated embodiments.

**comparison tests**

Based on the tire structure shown in Fig. 1, pneumatic tires of size 255/65R18 (Rim size 18×7.5J) were experimentally manufactured as test tires including

working example tires Ex.1 and Ex.2 in which the groove depths of the circumferential grooves were determined according to the equations (1) and (2), and
a comparative example tire Ref.1 in which the circumferential grooves had the same groove depths.

Then, the test tires were tested for the wear resistance, noise performance and durability, and measured for the tire weight. specifications of the test tires are shown in Table 1.

< wear resistance test >

The test tires were mounted on all wheels of a test car (passenger car), and the test car was traveled for 20,000 km on dry paved roads. Then, the amount of wear was measured at different axial positions, and the amount of wear at the position where the wear was most progressed, was obtained.
The results are indicated in Table 1 by an index based on comparative Example tire Ref.1 being 100, wherein the larger the value, the better the wear resistance.

< Noise performance test >

The test tires were mounted on all wheels of the test car. Then, the test car was run on a road noise measuring test course, and the pass-by noise was measured.
The results are indicated in Table 1 by an index based on comparative Example tire Ref.1 being 100, wherein the larger the value, the better the noise performance.

< Fuel efficiency test >

Each test tire was measured for the weight.
The results are indicated in Table 1 by an index based on comparative Example tire Ref.1 being 100, wherein the larger the value, the lighter the tire weight and the better the fuel efficiency.

< Durability test >

Each test tire in the standard state was attached to a tire drum tester, and run for 10,000 km under the standard tire load. Then, the tire was inspected to measure a total length of separation occurred at the edges of the belt layer.
The results are indicated in Table 1 by an index based on comparative Example tire Ref.1 being 100, wherein the larger the value, the better the durability.

Table 1

| Tire | Ref.1 | Ex.1 | Ex.2 |
|---|---|---|---|
| correction coefficient $\alpha$ | - | 0.5 | 1.0 |
| wear resistance | 100 | 100 | 100 |
| Noise performance | 100 | 103 | 105 |
| Fuel efficiency | 100 | 103 | 105 |
| Durability | 100 | 105 | 103 |

From the test results, it was confirmed that, according to the present invention, the noise performance and fuel efficiency are improved, while maintaining comparable wear resistance to that of the comparative example, and the durability is also improved.

**Description of the reference signs**

1  tire
2  tread portion
2a  ground contacting patch
4  circumferential groove

**Claims**

1. A tire (1) comprising a tread portion (2) provided with a plurality of circumferential grooves (4) extending in the tire circumferential direction,
   wherein

   ground contact lengths (L) of a ground contacting patch (2a) measured in the tire circumferential direction at axial positions (P) of the respective grooves (4), and groove depths (d) of the respective grooves (4) are in a relationship in which the groove depth (d) increases or decreases as the ground contact length (L) increases or decreases, wherein
   the ground contacting patch (2a) is that of the tread portion (2) when the tire (1) in its standard state is placed on a flat horizontal surface at a camber angle of zero, and loaded with a standard tire load, and
   the standard state is such that the tire (1) is mounted on a standard wheel rim and inflated to a standard tire pressure,
   **characterized in that**, when each circumferential groove is a target groove, the groove depth (d) of each target groove is set to be equal to the value of $r0 \times L / \{L + \alpha (L0-L)\}$, when L is the ground contact length of the ground contacting patch (2a) measured at the axial position of the target groove, r0 is a given value for the depth of a circumferential groove disposed on the tire equator (c) or most adjacently to the tire equator (c) among the circumferential grooves (4), L0 is the ground contact length of the ground contacting patch (2a) measured at the tire equator (c), and $\alpha$ is a coefficient between 0.5 to 1.0.

2. The tire (1) according to claim 1, wherein

   said respective ground contact lengths (L) include
   a crown ground contact length (L0) which is the ground contact length (L) measured at the tire equator (c), and
   a shoulder ground contact length which is the ground contact length (L) measured at an axial position spaced apart from the tire equator (c) by an axial distance of 80 % of a half ground contact width (Tw) which is an axial distance from the tire equator (c) to one of axially outer ends (Te) of the ground contacting patch (2a), and
   the crown ground contact length (L0) is in a range from 1.10 to 1.50 times the shoulder ground contact length.

3. The tire (1) according to claim 1 or 2, wherein
   when a lateral groove is a lateral target groove, the groove depth (d) of the lateral target groove is set to be equal to or less than the value of $r0 \times L / \{L + \alpha (L0-L)\}$.

4. The tire (1) according to claim 3, wherein
   the groove depth (d) of the lateral target groove is more than 80% of the value of $r0 \times L / \{L + \alpha (L0-L)\}$.

**Patentansprüche**

1. Reifen (1) mit einem Laufflächenabschnitt (2), der mit einer Vielzahl von Umfangsrillen (4) versehen ist, die sich in der Reifenumfangsrichtung erstrecken,
   wobei

   Bodenkontaktlängen (L) einer Bodenkontaktfläche (2a), gemessen in der Reifenumfangsrichtung an axialen Positionen (P) der jeweiligen Rillen (4), und Rillentiefen (d) der jeweiligen Rillen (4) in einer Beziehung stehen, in der die Rillentiefe (d) zunimmt oder abnimmt, wenn die Bodenkontaktlänge (L) zunimmt oder abnimmt, wobei die Bodenkontaktfläche (2a) diejenige des Laufflächenabschnitts (2) ist, wenn der Reifen (1) in seinem Standardzustand auf einer flachen horizontalen Oberfläche mit einem Sturzwinkel von Null platziert und mit einer Standardreifenlast belastet ist, und

der Standardzustand derart ist, dass der Reifen (1) auf eine Standardradfelge aufgezogen und auf einen Standardreifendruck aufgepumpt ist,

**dadurch gekennzeichnet, dass**, wenn jede Umfangsrille eine Zielrille ist, die Rillentiefe (d) jeder Zielrille so eingestellt ist, dass sie gleich dem Wert von r0 × L / {L + α (L0-L)} ist, wenn L die Bodenkontaktlänge der Bodenkontaktfläche (2a) ist, gemessen an der axialen Position der Zielrille, r0 ein gegebener Wert für die Tiefe einer Umfangsrille ist, die auf dem Reifenäquator (C) oder am nächsten zum Reifenäquator (C) unter den Umfangsrillen (4) angeordnet ist, L0 die Bodenkontaktlänge der Bodenkontaktfläche (2a) ist, gemessen am Reifenäquator (C), und α ein Koeffizient zwischen 0,5 und 1,0 ist.

2. Reifen (1) nach Anspruch 1, wobei

die jeweiligen Bodenkontaktlängen (L) umfassen
eine Kronen-Bodenkontaktlänge (L0), die Bodenkontaktlänge (L) ist, gemessene am Reifenäquator (C), und
eine Schulter-Bodenkontaktlänge, die die Bodenkontaktlänge (L) ist, gemessen an einer axialen Position, die vom Reifenäquator (C) um einen axialen Abstand von 80 % einer halben Bodenkontaktbreite (Tw) beabstandet ist, die ein axialer Abstand vom Reifenäquator (C) zu einem der axial äußeren Enden (Te) des Bodenkontaktfläche (2a) ist, und
die Kronen-Bodenkontaktlänge (L0) in einem Bereich vom 1,10- bis 1,50-fachen der Schulter-Bodenkontaktlänge liegt.

3. Reifen (1) nach Anspruch 1 oder 2, wobei,
wenn eine Querrille eine Zielquerrille ist, die Rillentiefe (d) der Zielquerrille so eingestellt ist, dass sie gleich oder kleiner als der Wert von r0 × L / {L + α (L0-L)} ist.

4. Reifen (1) nach Anspruch 3, wobei
die Rillentiefe (d) der Zielquerrille größer als 80% des Wertes von r0 × L / {L + α (L0-L)} ist.


**Revendications**

1. Pneumatique (1) comprenant une portion formant bande de roulement (2) dotée d'une pluralité de rainures circonférentielles (4) s'étendant dans la direction circonférentielle du pneumatique,
dans lequel

des longueurs de contact au sol (L) d'un patch de contact au sol (2a) mesurées dans la direction circonférentielle du pneumatique au niveau de positions axiales (P) des rainures respectives (4), et des profondeurs de rainure (d) des rainures respectives (4) sont dans une relation dans laquelle la profondeur de rainure (d) augmente ou diminue lorsque la longueur de contact au sol (L) augmente ou diminue, dans lequel
le patch de contact au sol (2a) est celui de la portion formant bande de roulement (2) quand le pneumatique (1) dans son état standard est placé sur une surface horizontale plate à un angle de cambrure de zéro, et est chargé avec une charge de pneumatique standard, et
l'état standard est tel que le pneumatique (1) est monté sur une jante de roue standard et est gonflé à une pression de pneumatique standard,
**caractérisé en ce que**
quand chaque rainure circonférentielle est une rainure cible, la profondeur de rainure (d) de chaque rainure cible est fixée comme étant égale à la valeur de r0 × L / {L + α (L0-L)}, où L et la longueur de contact au sol du patch de contact au sol (2a) mesurée au niveau de la position axiale de la rainure cible, r0 est une valeur donnée pour la profondeur d'une rainure circonférentielle disposée sur l'équateur de pneumatique (C) ou de manière la plus adjacente à l'équateur de pneumatique (C) parmi les rainures circonférentielles (4), L0 est la longueur de contact au sol du patch de contact au sol (2a) mesurée au niveau de l'équateur de pneumatique (C), et α est un coefficient entre 0,5 et 1,0.

2. Pneumatique (1) selon la revendication 1, dans lequel

lesdites longueurs de contact au sol respectives (L) incluent une longueur de contact au sol de couronne (L0) qui est la longueur de contact au sol (L) mesurée au niveau de l'équateur de pneumatique (C), et une longueur de contact au sol d'épaulement qui est la longueur de contact au sol (L) mesurée au niveau d'une position axiale espacée de l'équateur de pneumatique (C) à raison d'une distance axiale de 80 % d'une demi-largeur de contact au sol (TW) qui est une distance axiale depuis l'équateur de pneumatique (C) jusqu'à l'une des extrémités axialement extérieures (Te) du patch de contact au sol (2a), et la longueur de contact au sol de couronne (L0) est dans une plage allant de 1,10 à 1,50 fois la longueur de contact au sol d'épaulement.

3. Pneumatique (1) selon la revendication 1 ou 2, dans lequel quand une rainure latérale est une rainure cible latérale, la profondeur de rainure (d) de la rainure cible latérale est fixée comme étant égale ou inférieure à la valeur de $r0 \times L / \{L + \alpha (L0\text{-}L)\}$.

4. Pneumatique (1) selon la revendication 3, dans lequel la profondeur de rainure (d) de la rainure cible latérale est supérieure à 80 % de la valeur de $r0 \times L / \{L + \alpha (L0\text{-}L)\}$.

# FIG.1

EP 3 967 521 B1

# FIG.2

# FIG.3

EP 3 967 521 B1

# FIG.4

```
                start
  S1
                first step

  S2
                second step

  S3
                third step

  S4
                fourth step

  S5
                fifth step

                 end
```

**REFERENCES CITED IN THE DESCRIPTION**

**Patent documents cited in the description**

- JP 2019182339 A
- DE 102008055498 A1
- US 20190381836 A1
- DE 112014002971 T5